# EUROPÄISCHE PATENTSCHRIFT

(11) **EP 4 587 815 B1**
(45) Veröffentlichungstag und Bekanntmachung des Hinweises auf die Patenterteilung: **06.05.2026**
(21) Anmeldenummer: 23768308.1
(22) Anmeldetag: 13.09.2023
(51) Int. Cl.: G01N 23/04, G01N 23/083

(54) **RÖNTGENSYSTEM**
X-RAY SYSTEM
SYSTÈME À RAYONS X

(30) Priorität: 14.09.2022 WO PCT/EP2022/075499
(43) Veröffentlichungstag der Anmeldung: 23.07.2025
(73) Patentinhaber: Fraunhofer-Gesellschaft zur Förderung der angewandten Forschung e.V., 80686 München (DE)
(72) Erfinder: SALAMON, Michael, 91058 Erlangen (DE)
(74) Vertreter: Pfitzner, Hannes
(86) Internationale Anmeldenummer: PCT/EP2023/075153
(87) Internationale Veröffentlichungsnummer: WO 2024/056737

(56) Entgegenhaltungen:
- WO-A1-2016/011205
- US-A1- 2004 156 477
- US-B1- 6 542 580
- YOKOSHIMA TOKIHIKO ET AL: "Direct observation of internal state of thermal runaway in lithium ion battery during nail-penetration test", JOURNAL OF POWER SOURCES, vol. 393, 1 July 2018 (2018-07-01), AMSTERDAM, NL, pages 67 - 74, XP093035926, ISSN: 0378-7753, DOI: 10.1016/j.jpowsour.2018.04.092

## Beschreibung

Ausführungsbeispiele der vorliegenden Erfindung beziehen sich auf ein Röntgensystem zur zerstörungsfreien Werkstoffprüfung eines zu durchstrahlenden Objekts, insbesondere eines Batteriemoduls (wie z. B. einer Hochvoltbatterie) eines Fahrzeugs oder eines in ein Fahrzeug eingebauten Batteriemoduls. Weitere Ausführungsbeispiele beziehen sich auf ein Verfahren zum Ermitteln einer Röntgenaufnahme sowie auf ein Computerprogramm. Im Generellen liegen Ausführungsbeispiele der Erfindung auf dem Gebiet der schnellen Batterieinspektion am Gesamtfahrzeug mittels Röntgentechnik.

Der Einblick in das Innere eines Batteriemoduls eines E-Fahrzeugs ist bislang nicht zerstörungsfrei möglich. Dabei spielt die mechanische Integrität der Batteriemodule z.B. nach Unfällen eine besonders wichtige Rolle, um die Möglichkeiten einer Fahrzeuginstandsetzung besser beurteilen zu können. Auch für die Beurteilung des Fahrzeugzustands bei unklarer Fahrzeughistorie im Gebrauchtwagenmarkt kann das Verfahren zum Einsatz kommen.

Deshalb besteht der Bedarf nach einem verbesserten Ansatz.

Auch in der Patentliteratur sind einige Röntgensysteme offenbart. So zeigt die US 2004/156477 ein Röntgensystem zur zerstörungsfreien Werkstoffprüfung eines zu durchstrahlenden Objekts. Darüber hinaus sind auch noch die Schriften US 6542580 B1 und WO 2016/011205 A1 zu nennen. Darüber hinaus formt die Veröffentlichung mit dem Titel "Direct observation of internal state of thermal runaway in lithium ion battery during nail-penetration test" weiteren Stand der Technik.

Aufgabe der vorliegenden Erfindung ist es, eine zerstörungsfreie Werkstoffprüfung, insbesondere von Fahrzeugbatterien bei Elektrofahrzeugen, zu ermöglichen.

Die Aufgabe wird durch den Gegenstand der unabhängigen Patentansprüche gelöst.

Ausführungsbeispiele der vorliegenden Erfindung schaffen ein Röntgensystem zur zerstörungsfreien Werkstoffprüfung eines zu durchstrahlenden Objekts, wie z. B. eines Batteriemoduls eines Fahrzeugs oder eines in ein Fahrzeug eingebauten Batteriemoduls. Das Objekts oder einem Teil der Breite des Objekts entsprechen, das heißt also, dass in Querrichtung nur ein Teil des Objekts abgebildet wird. Der Öffnungswinkel der Strahlengeometrie beträgt < 10°.

Entsprechend Ausführungsbeispielen kann der Abstand zwischen Strahlenquelle und zu durchstrahlendem Objekt mindestens 5 m oder sogar mindestens 10 m betragen. Es hat sich herausgestellt, dass bei 11 m bzw. mindestens 11 m eine gute Abtastung eines 2 m breiten Objekts möglich ist. Die 10°-Strahlengeometrie sowie der Abstand zielt insbesondere darauf ab, dass das Objekt in seiner Breite oder zumindest ein ausreichend breiter Abtastbereich in Objektbreite (Querrichtung) abtastbar ist.

Um das Objekt in Längsrichtung gut abtasten zu können, kann entsprechend Ausführungsbeispielen das Objekt in Vorschubrichtung bewegt werden bzw. kontinuierlich bewegt werden. Die Vorschubrichtung kann beispielsweise senkrecht zur Querrichtung meinen.

Um mit weniger als beispielsweise 10 m oder weniger als beispielsweise 5 m, wie z. B. 3 m, auskommen zu können, kann die mindestens eine Strahlenquelle durch mehrere Einzelstrahlenquellen gebildet sein. Beispielsweise ist die mindestens eine Strahlenquelle durch mehrere Einzelstrahlenquellen, die quer zum Objekt angeordnet sind, gebildet. Wenn man beispielsweise von zwei Strahlenquellen ausgeht, kann der Abstand von 10 m auf 5 m reduziert werden. Wenn man von drei Einzelstrahlenquellen ausgeht, kann der Abstand von 10 m auf 3 m in etwa reduziert werden. Das heißt also, dass entsprechend Ausführungsbeispielen mehrere Strahlenquellen, die hier als Einzelstrahlenquellen bezeichnet sind, vorgesehen sind. Somit beträgt entsprechend Ausführungsbeispielen der Abstand mindestens 2 m oder mindestens 3 m zum durchstrahlenden Objekt. Bei dem Ausführungsbeispiel mit der zu durchstrahlenden Hochvoltbatterie / Batteriemodul ist die Hochvoltbatterie da Batteriemodul das zu durchstrahlende Objekt. Dieses kann entweder mit in der vollen Breite untersucht werden, sodass sich entsprechend großer Abtastbereich einstellt oder auch nur partiell, sodass sich eine kleiner Abtastbereich (je Stahlenquelle) und damit kleiner Strahler-Objekt-Abstand einstellt.

Entsprechend Ausführungsbeispielen wird der Abstand von Strahlenquelle gegenüber der zu durchstrahlenden Fahrzeugbatterie (Batteriemodul) oder der der Strahlenquelle zugewandten Oberfläche der zu durchstrahlenden Fahrzeugbatterie gemessen. Bei einer zu durchstrahlenden Fahrzeugbatterie handelt es sich typischerweise um ein rechteckförmiges Objekt, dessen Hauptausstreckungsrichtung in Längsrichtung des Fahrzeugs oder in Breitenrichtung des Fahrzeugs angeordnet ist. Auch ist ein quadratisches Längen-Breiten-Verhältnis oder in etwa quadratisches Längen-Breiten-Verhältnis denkbar. In der Tiefe weist die Fahrzeugbatterie häufig eine Höhe von wenigen Zentimetern, wie z. B. 10 cm, 15 cm oder 20 cm, auf. Mit der erläuterten Anordnung einer Strahlenquelle, die in Tiefenrichtung bzw. parallel zur Tiefenrichtung strahlt, kann so das Objekt entlang der 10cm Höhe gut abgetastet werden, wobei über die Länge und Breite eine gute Auflösung möglich ist, wie oben bereits erläutert wurde.

Bei obigen Ausführungsbeispielen wurde also davon ausgegangen, dass die sich in Längen- und Breitenrichtung im Wesentlichen senkrecht zur Durchstrahlungsrichtung erstreckende Batterie
- entweder durch eine weit beabstandete Strahlenquelle, z. B. mindestens 10 m,
- oder mehrere, z.B. in 3 m oder 5 m beabstandete, quer zur Vorschubrichtung angeordnete Strahlenquellen
durchstrahlt werden.

Bei beiden Durchstrahlungsvarianten ist der Öffnungswinkel der Strahlengeometrie auf 10° beschränkt.

Ausführungsbeispielen der vorliegenden Erfindung die Erkenntnis zugrunde, dass durch die Kombination aus großem Abstand und geringer Strahlenkegelbreite eine Strahlengeometrie ausgebildet wird, die eine scharfe Abbildung von in Längen- oder Breitenrichtung in des Batteriemoduls vorherrschenden Spalten (zwischen einzelnen Zellen) ermöglicht. Hierbei kann vorteilhafterweise die Röntgenenergie nur so hoch gewählt werden, dass es möglich ist, Blechstrukturen des Fahrzeugs hindurch zu gelangen, nicht unbedingt jedoch durch die vollständigen Batteriezellen. Das ermöglicht weiterhin, dass die Spalten zwischen Batteriezellen gut aufgefunden werden, da diese weniger Absorption im Vergleich zu den Batteriezellen aufweisen. Fehlstellen, z. B. Kontakte von Batteriezellen, die auf Batteriefehler hinweisen, können so einfach und effizient erkannt werden.

Deshalb ist die Röntgenquelle ausgebildet, Energie von maximal 450 KeV oder sogar von maximal 360 KeV bereitzustellen. Die Energie ist also so gering gewählt, dass keine Durchstrahlung eines intakten Objekts (einer intakten Batteriezelle) erfolgt, sondern nur eine Durchstrahlung von Spalten zwischen den Batteriezellen.

Bei dem Ausführungsbeispiel mit den mehreren Einzelstrahlenquellen gibt es unterschiedliche Varianten. Entsprechend einem Ausführungsbeispiel können die Strahlengeometrien der Einzelstrahlenquellen sich überlappende Strahlenfelder und/oder sich in der Fokusebene überlappende Strahlenfelder ausbilden. Hierbei ist ein leichter Überlapp, wie z. B. maximal 10 % der Strahlenfeldbreite, möglich. Entsprechend weiteren Ausführungsbeispielen können sich die Strahlengeometrien der Einzelstrahlenfelder großflächig überlappen (ebenfalls in Fokusebene). Bei dieser Variante wird dann entsprechend Ausführungsbeispielen ein wechselseitiger Betrieb der Einzelstrahlenquellen gewählt.

Entsprechend Ausführungsbeispielen erstreckt sich der Röntgendetektor über die gesamte Breite des Objekts. Entsprechend weiteren Ausführungsbeispielen ist der Röntgendetektor durch einen Zeilendetektor oder einen Flächendetektor gebildet, der sich über die Breite des Objekts erstreckt. Entsprechend Ausführungsbeispielen weist das Röntgensystem mehrere entlang einer Vorschubrichtung angeordnete Strahlendetektoren oder Strahlenquellen auf. Die Verwendung von mehreren Röntgendetektoren hat den Vorteil, dass so mehrere Röntgenbilder aus leicht unterschiedlichen Perspektiven erhalten werden, so dass in Nichtfokusebenen vorliegende Überlagerungsobjekte, wie z. B. Karosserieteile, bei der Durchstrahlung eines Fahrzeugs mit einer zu durchstrahlenden Hochvoltbatterie erkannt und dann zu einem späteren Zeitpunkt ausgeblendet werden können. Deshalb weist entsprechend Ausführungsbeispielen das Röntgensystem eine Auswertevorrichtung auf, die ausgebildet ist, um mehrere Aufnahmen über mehrere Positionen und/oder mehrere Aufnahmen über mehrere Strahler-Detektor-Kombinationen auszuwerten. Die Auswertevorrichtung ist ausgebildet, Überlagerungsobjekte in den einzelnen Aufnahmen anhand von mehreren Aufnahmen zu erkennen und/oder um die Abbildungen eines Überlagerungsobjekts in den einzelnen Röntgenaufnahmen zu kompensieren, z. B. durch Subtraktion. Entsprechend weiteren Ausführungsbeispielen weist das Röntgensystem eine Auswertevorrichtung auf, die ausgebildet ist, ein Überlagerungsobjekt anhand einer Referenzaufnahme des zu durchstrahlenden Objekts zu erkennen und/oder die Abbildungen des Überlagerungsobjekts in den einzelnen Aufnahmen zu kompensieren. Entsprechend einem weiteren Ausführungsbeispiel kann die Auswertevorrichtung auch die Aufnahme mit geringer oder keiner Überlagerung auswählen bzw. einer anderen Aufnahme vorziehen. Die Auswertevorrichtung weist entsprechend weiteren Ausführungsbeispielen einen KI-Algorithmus auf, der ausgebildet ist, solche Überlagerungsobjekte zu erkennen. Ferner ist die Auswertevorrichtung ausgebildet, um morphologische Merkmale zu erkennen. Beispielsweise kann die Auswertevorrichtung ausgebildet sein, um Abweichungen des Objekts oder von Teilen des Objekts von einer Normalform zu erkennen. Bei einer Verformung einer zylindrischen Zelle oder einer prismatischen Zelle gibt es also Abweichungen von der zylindrischen oder prismatischen Normalform. Auch kann die Auswertung Abweichungen der Spaltbreite von einer Normalform erkennen. Hierbei wird insbesondere auf Unterschreitungen der Normalspaltbreite abgestellt. Deshalb kann die Auswertevorrichtung ausgebildet sein, einen Abstand zwischen Zeilen eines Objekts, wie z. B. Zellen eines Batteriemoduls, zu bestimmen.

Bezüglich dem Röntgensystem sei ferner angemerkt, dass die Strahlengeometrie von < 10° durch Kollimierung von Einzelstrahlen erreicht werden kann. Beispielsweise kann jede Strahlenquelle bzw. Einzelstrahlenquelle einen Kollimator aufweisen.

Um den Fokus anzupassen oder das Röntgensystem auf mehrere Quellen zu adaptieren, kann entsprechend Ausführungsbeispielen der Abstand zwischen der mindestens einen Röntgenquelle und dem zu durchstrahlenden Objekt (und damit auch zum Strahlendetektor) angepasst werden. Das ist insbesondere auch dann vorteilhaft, wenn unterschiedliche Objekte, wie z. B. unterschiedliche Fahrzeuge (SUV oder normaler PKW), durchstrahlt werden sollen.

Ein weiteres Ausführungsbeispiel bezieht sich auf ein Verfahren mit dem zentralen Schritt: Durchstrahlen eines zu durchstrahlenden Objekts in einem Abstand der Strahlenquelle von dem zu durchstrahlenden Objekt von mindestens zweifacher, mindestens dreifacher oder mindestens fünffacher Breite des Abtastbereichs, um eine erste Aufnahme zu erhalten.

Das Verfahren kann den Schritt des Wiederholens des Schritts des Durchstrahlens für eine weitere Aufnahme aufweisen. Ferner kann das Verfahren auch den Schritt des Kompensierens eines Überlappungsobjekts auf Basis einer Erkennung des Überlappungsobjekts in der Aufnahme unter Zuhilfenahme der weiteren Aufnahme aufweisen.

Entsprechend weiteren Ausführungsbeispielen kann das Verfahren computerimplementiert sein. Das heißt also, dass ein weiteres Ausführungsbeispiel sich auf ein Computerprogramm bezieht.

Weiterbildungen sind in den Unteransprüchen definiert. Nachfolgend werden Ausführungsbeispiele der vorliegenden Erfindung anhand der beiliegenden Zeichnungen erläutert. Es zeigen:
- Fig. 1a1, 1a2, 1b1, 1b2: schematische Darstellungen zur Illustration der Durchstrahlung eines Objekts, wie z. B. eines Fahrzeugs mit Fahrzeugbatterie, bei Verwendung konventioneller Technik zur Illustration der mit der Erfindung adressierten Probleme;
- Fig. 2: ein schematisches Blockschaltbild zur Illustration eines Röntgensystems gemäß einem Basisausführungsbeispiel der Erfindung;
- Fig. 3a1, 3a2, 3b1, 3b2: schematische Darstellungen zur Durchstrahlung eines Objekts, hier eines Fahrzeugs mit Batterie, gemäß einem erweiterten Ausführungsbeispiel;
- Fig. 4a1, 4a2, 4b1, 4b2: schematische Darstellungen von Röntgensystemen gemäß erweiterten Ausführungsbeispielen;
- Fig. 5a-5c: eine schematische Darstellung zur Illustration eines weiteren Aspekts gemäß weiteren Ausführungsbeispielen;
- Fig. 6a-6c: schematische Blockschaltbilder zur Illustration von Verarbeitungen von Röntgensignalen zur Absorption von erweiterten Ausführungsbespielen; und
- Fig. 7a-7d: exemplarische Durchstrahlungsaufnahmen gewonnen mit einem Röntgensystem gemäß Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

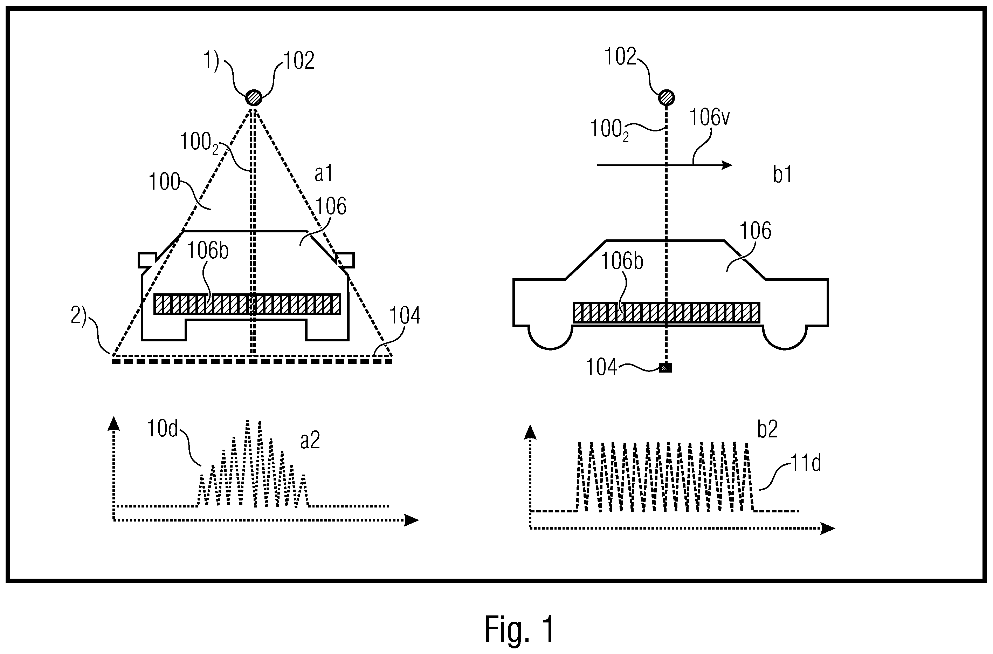

Fig. 1 zeigt ein Röntgensystem mit einer Röntgengeometrie 100, die im Wesentlichen durch die Anordnung von Strahlenquelle 102 und Detektor 104 definiert ist. Die Geometrie ist in der Fig. 1a1 in Querrichtung und in Fig. 1b1 entlang der Längsrichtung dargestellt. Bei dem zu durchstrahlenden Objekt 106b handelt es sich beispielsweise um eine Hochvoltbatterie eines Fahrzeugs 106. Das Fahrzeug 106 wird in Fig. 1a1 in Querrichtung und in Fig. 1b2 in Längsrichtung durchstrahlt. Bei dem Detektor 104 kann es sich beispielsweise um einen Zeilendetektor 104 handeln, der in Querrichtung, das heißt in Querrichtung zum Fahrzeug 106, angeordnet ist. Um in Längsrichtung des Fahrzeugs 106 bzw. insbesondere das Batteriemodul 106b durchstrahlen zu können, wird das Objekt entsprechend einer Variante in Vorschubrichtung 106v bewegt.

Bei dem hier zu durchstrahlenden Objekt 106b handelt es sich um eine Hochvoltbatterie (Lithium Ionen-Batterie), die beispielsweise Zellen(Einzelzellen unterschiedlicher Form, zylindrisch oder prismatisch) aufweist, die durch Spalten voneinander getrennt sind. Hier wird die Durchstrahlungsrichtung der Durchstrahlungsgeometrie 100 so gewählt, dass die Spalte zwischen den Zellen in Strahlungsrichtung durchstrahlt werden. Das ist auch deutlich anhand der Parallelität des Zentralstrahls 100z der Strahlengeometrie dargestellt. Infolge der Durchstrahlung des Batteriemoduls 106b mit den Batteriezellen und den Spalten bilden sich Maxima bei den Spalten und Minima und bei den Zellen aus. Dieses Durchstrahlungsmuster ist anhand der Diagramms 10d in Querrichtung (vgl. Fig. 1a2) und 11d die in Längsrichtung (vgl. Fig. 1b2) gezeigt. Wie zu erkennen ist, weist das Diagramm 10d eine gute Auflösung um den Zentralstrahl 100z auf, allerdings eine mäßige oder stark abnehmende Auflösung in den Randbereichen der Durchstrahlungsgeometrie 100. In Längsrichtung erfolgt die Abtastung insbesondere im Bereich des Zentralstrahls 100z, durch welchen das Fahrzeug 100 mit dem Batteriemodul 100b in Vorschubrichtung 106v bewegt wird. Die hier dargestellte Situation stellt die Ausgangssituation für Ausführungsbeispiele der Erfindung dar, bei welcher das Fahrzeug 106 mit des Batteriemoduls 106b durchleuchtet wird. Teile dieser Erläuterung sind bereits Aspekte der Erfindung, wie z. B. die optionale Verwendung des Vorschubs 106v entlang der Längsrichtung des Fahrzeugs 106. Wie anhand von Fig. 1a2 gezeigt wurde, gibt es allerdings erhebliche Probleme bei der Auflösung des Objekts 106b in Querrichtung. Das dargestellte, vereinfachte Absorptionsprofil verdeutlicht den durch die Schrägabbildung entstehenden Kontrastabfall der Spaltregion innerhalb der Module. Solche, bereits bekannte Aufnahmegeometrien und Ansätze sind somit ungeeignet für die hier zugrundeliegende Aufgabenstellung der Batteriezellenprüfung. An dieser Stelle sei angemerkt, dass bei der Diskussion nachfolgender Ausführungsbeispiele immer von drei verschiedenen Richtungen gesprochen wird, nämlich:
- Durchstrahlungsrichtung: Hierbei handelt es sich um die Richtung entlang der Strahlenausbreitung parallel zum Zentralstrahl 100z der Strahlenquelle/Röntgenquelle 102.
- Vorschubrichtung: Bei manchen Ausführungsbeispielen wird davon ausgegangen, dass das Objekt 106 bzw. 106b in einer Vorschubrichtung 106v während der Durchstrahlung durch die Strahlengeometrie 100 durchbewegt wird. Hierbei handelt es sich um die Vorschubrichtung 106v. Diese Vorschubrichtung 106v ist orthogonal bzw. im Wesentlichen orthogonal zu der Durchstrahlungsrichtung, wobei das sowohl für das hier dargestellte Ausführungsbeispiel der Durchstrahlung eines Fahrzeugs 106 aus der Vogelperspektive, aber auch für andere Durchstrahlung, wie z. B. von der Seite, gilt.
- Breitenrichtung: Diese Richtung definiert in der Strahlengeometrie 100 die Durchstrahlungsbreite, die im Wesentlichen durch den Öffnungswinkel der Strahlengeometrie 100 und die Breite des Detektors 104 bestimmt ist. Die Querrichtung erstreckt sich also entlang der Breite des Detektors 104 und typischerweise senkrecht zu der Vorschubrichtung. Ferner ist die Querrichtung im Wesentlichen orthogonal zur Durchstrahlungsrichtung.
- Längsrichtung: Für Ausführungsbeispiele ohne Vorschub kann die Vorschubrichtung auch als Längsrichtung bezeichnet werden, wenn beispielsweise ein Flächendetektor statt einem Liniendetektor eingesetzt wird.

Um insbesondere die Auflösung in Querrichtung zu optimieren, wird folgender Aufbau eines Röntgensystems bzw. einer Röntgenanordnung vorgeschlagen.

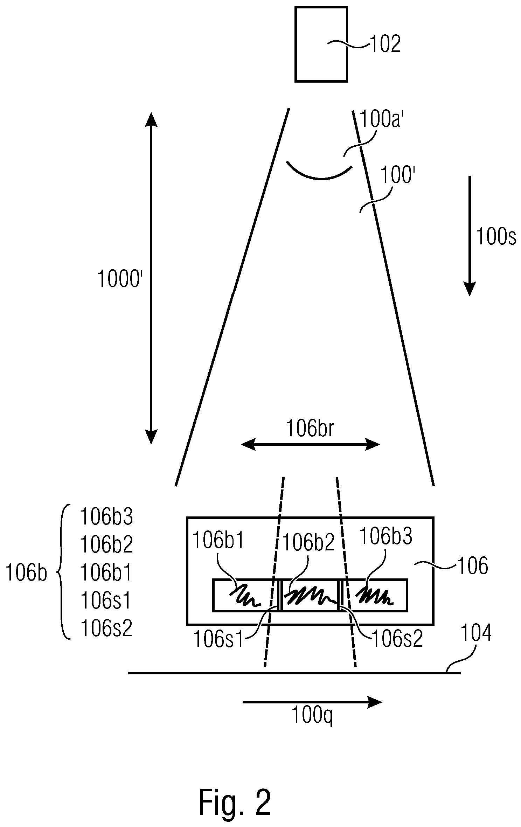

Fig. 2 zeigt eine Strahlenquelle 102 mit einem gegenüberliegenden Strahlendetektor 104. Diese sind so voneinander beabstandet, dass die Strahlengeometrie 100' ausgebildet wird. Diese dient zur Durchstrahlung des Objekts 106 mit den Batteriezellen 106b. Exemplarisch sind drei Batteriezellen 106b1, 106b2 und 106b3 dargestellt. Dazwischen bilden sich die Spalte 106s1 und 106s2 aus. Diese verlaufen im Wesentlichen längs zur Durchstrahlungsrichtung 100s. Der Detektor 104 ist quer zur Durchstrahlungsrichtung 106 angeordnet (vgl. Querrichtung 100q). Die Geometrie 100' ist durch zwei besondere Merkmale charakterisiert, nämlich den Öffnungswinkel 100α' der Geometrie 100', der auf 10° oder weniger beschränkt ist (≤10°), sowie der Abstand 100d'. Im Vergleich zu konventionellen Strahlendetektoraufbauten richtet sich der aufgespannte Öffnungswinkel im Wesentlichen nach dem minimalen Abstand der Gesamtlage und nicht nach den spezifischen Anforderungen aus der Analyse, wie einer Batteriezellenanalyse. Dieser Abstand 100d' beträgt mindestens eine zweifache oder mindestens dreifache oder sogar mindestens fünffache Breite des Abtastbereichs des Objekts 106. In diesem Ausführungsbeispiel entspricht der Abtastbereich der Breite 106br des Objekts 106. Je größer der Abstand 100d' gegenüber dem Abtastbereich ist, umso paralleler sind die Strahlen zu der Durchstrahlungsrichtung 100s. Wenn man beispielsweise von einer Objektbreite von 2,2 m ausgeht, ergibt sich bei Faktor 5 ein Abstand 100d' von 11 m. Dieser Abstand wird bevorzugterweise zwischen dem zu durchstrahlenden Objekt 106b und der Strahlenquelle 102 bzw. dem Brennfleck der Strahlenquelle 102 ermittelt. Maßgeblich ist hierbei die Oberfläche des Objekts 106b, die der Strahlenquelle 102 zugewandt ist. Das ist deshalb wichtig, zu betonen, da bei einer bevorzugten Anwendung die Batterien 106b eines Elektrofahrzeugs 106 durchstrahlt werden sollen, die typischerweise im Unterboden angeordnet sind, wobei sich oberhalb der Batteriefläche 106b eine Aufbauhöhe von über 1 m einstellen kann. Wie bereits erläutert, sind dann die Strahlen der Strahlengeometrie 100' im Wesentlichen parallel zur Durchstrahlungsrichtung 100s. Da die Spalte 106s1 und 106s2 auch im Wesentlichen parallel zu der Durchstrahlungsrichtung 100s verlaufen, können die Röntgenstrahlen die Spalte 106s1 und 106s2 passieren, ohne die Batteriezellen 106b1, 106b2 und 106b3 zu durchqueren. Dies ermöglicht eine scharfe Abbildung der Spalte 106s2 und 106s2 in Abgrenzung zu den Batteriezellen 106b1, 106b2 und 106b3. Hierdurch ist eine schnelle Inaugenscheinnahme der inneren Struktur, eines im Fahrzeug 106 verbauten Batteriemoduls 106b, mittels Röntgenstrahlung, möglich. Beschädigungen an der Batterie, wie z. B. Kurzschluss zwischen Batteriezellen, würden sich durch eine reduzierte Spaltbreite kenntlich machen lassen. Insofern kann einfach und effizient eine Beschädigung festgestellt werden. Aufgrund dessen, dass vor allem mögliche Spalten untersucht werden, kann weiter gemäß Ausführungsbeispielen das Energieniveau der Strahlenquelle reduziert werden, z. B. auf 450 KeV oder sogar 360 KeV. Das reicht zwar dann nicht mehr für die Durchstrahlung der Batteriezelle an sich, aber für die Durchstrahlung des Spalts.

Ausführungsbeispiele der vorliegenden Erfindung schaffen also eine Röntgenanordnung bzw. ein Röntgensystem umfassend mindestens die Strahlenquelle 102 sowie einen Röntgendetektor 104, die so zueinander angeordnet sind, dass ein möglichst verzerrungsfreies Bild der charakteristischen Zellform 106b1, 106b2, 106b3 realisiert wird. Entsprechend Ausführungsbeispielen kann durch eine kontinuierliche Bewegung der Scaneinheit (102+104) oder des Objekts 106+106b entlang der von der Strahlenquelle 102 und dem Detektor 104 definierten Strahlachse 100s eine Abtastung des Objekts 106 bzw. insbesondere 106b in Längsrichtung erfolgen. Entsprechend einem Ausführungsbeispiel wird die Röntgenenergie nur so hoch gewählt, dass es möglich ist, durch die Blechstruktur des Fahrzeugchassis 106 hindurch zu gelangen, nicht unbedingt jedoch durch die Bestandteilte der Batteriezellen 106b1, 106b2 und 106b3. Die Detektion fokussiert sich auf das Auffinden der aus der Vogelperspektive gut zu erkennenden Spalte 106s1, 106s2 zwischen den einzelnen Batteriezellen 106b1, 106b2 und 106b3, die in der Regel keine erhöhte Absorption aufweisen (so dass die Röntgenstrahlen der Strahlenquelle 102 durch den Detektor 104 entsprechend detektiert werden können).

Gegenüber herkömmlichen Röntgensystemen, wie z. B. der Röntgendurchstrahlung großvolumiger Objekte, wie z. B. Container, erfolgt hier eine spezielle Anpassung der Strahlenform 100' an das zu durchstrahlende Objekt 106 bzw. 106b. Die Geometrie, insbesondere der Abstand 100d' unter Berücksichtigung des Öffnungswinkels 100α', ist in Abhängigkeit des zu untersuchenden Objekts bzw. der zu untersuchenden Geometrie im Inneren der Batteriemodule integrierten Batteriezellen 106b1, 106b2 und 106b3 gewählt. Allgemeine Regeln hierfür lauten entsprechend Ausführungsbeispielen: Festlegen des Röntgenquellen-Objektabstands 100d' größer dem 2-, 3- oder 5-Fachen der Abtastbreite bzw. Objektbreite 106b. Wenn nur ein Teil des Objekts 106b in Breitenrichtung abgetastet werden soll, kann die Abtastbreite auch kleiner der Objektbreite sein, um so einen Ausschnitt abzubilden. Dies resultiert dann in einem kürzeren Abstand 106d', aber mit dem gleichen Mindestverhältnis.

Begrenzen der Öffnungswinkel der Strahlengeometrie auf 10° oder beispielsweise 8° oder 5°. Dies hat den Zweck, eine entsprechende Parallelität der Strahlen im Strahlengang sicherzustellen. Entsprechend Ausführungsbeispielen kann für die optimale Abbildung der inneren Strukturen 106b1, 106b2, 106b3, 106s1, 106s2 ein möglichst kleiner Öffnungswinkel 100α' des von der Röntgenquelle 102 ausgesandten Strahlenbündels bei einem gleichzeitig möglichst großem Strahlenfeld (siehe erstgenannter allgemeiner Punkt) gewählt werden. Dies ermöglicht, die sogenannte Parallaxe in der Abbildung zu umgehen. Im Gegensatz zu einer Punkt-für-Punkt-Erfassung mittels eines nadelförmigen Strahls ist dieses beschriebene Vorgehen wesentlich zeiteffizienter und kommt daher für schnelle (Serien-) Untersuchungen in Frage. Entsprechend Ausführungsbeispielen kann die Begrenzung durch Kollimieren bzw. einem Kollimator (nicht dargestellt), der mit der Röntgenquelle 102 gekoppelt ist, erfolgen.

Ausrichten der Durchstrahlungsrichtung 100s an die Spalte 106s1 und 106s2 bzw. allgemein an die zu durchstrahlenden Bereiche mit den niedrigsten Absorptionslängen bzw. Absorptionskoeffizienten.

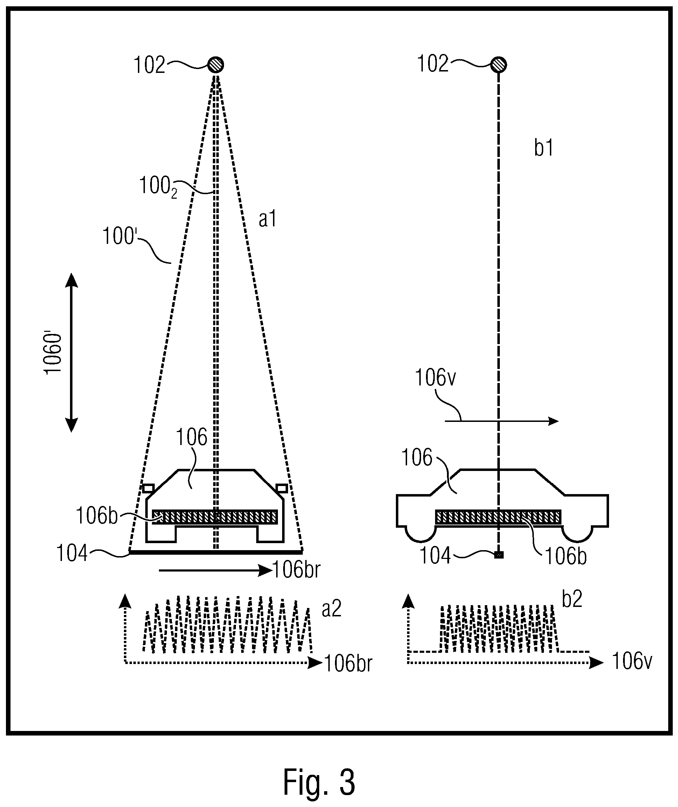

Die Kombination von einem oder mehreren dieser Auslegungsmaximen ermöglicht eine flächenartige Strahlengeometrie, die aufgrund eines sehr großen Abstands zwischen Quelle 102 und Detektor 104 zu einer nahezu parallelen Abbildung der inneren Batteriezellenstruktur 106b quer zum Fahrzeug 106 führt, während die Längsachse des Fahrzeugs 106 entsprechend weiteren Ausführungsbeispielen verzerrungsfrei schichtweise abgetastet werden kann, wie anhand von Fig. 3 dargestellt ist.

Fig. 3 zeigt in Abbildung 3a1 die Abtastung in Querrichtung und in Fig. 3b1 die Abbildung in Längsrichtung.

Grundlegendes Inspektionssystem zur Analyse von Batteriemodulen sind durch einen besonders großen Abstand zwischen Quelle und Detektor definiert, um den Öffnungswinkel möglichst gering zu halten. Wie im Absorptionsprofil gezeigt können die Spalte über den gesamten Fahrzeugquerschnitt dargestellt werden.

Strahlenquelle, Strahlendetektor, Strahlengeometrie, zu durchstrahlendes Objekt sind wiederum mit dem Bezugszeichen 102, 104, 106, 106b, 100' markiert. Wie hier zu erkennen ist, ist der Abstand 100d' sehr groß im Verhältnis zur Objektbreite 106br gewählt. Wie in Fig. 3b1 gezeigt ist, handelt es sich bei dem Detektor 104 um einen Zeilendetektor, der in Breitenrichtung 106br angeordnet ist. Um eine Abtastung in Längsrichtung des Fahrzeugs 106 bzw. des Batteriemoduls 106b zu ermöglichen, wird das Fahrzeug 106 in Vorschubrichtung 106v relativ zu dem Röntgensystem umfassend die zumindest Elemente 102 und 104 bewegt. Es sei angemerkt, dass entsprechend Ausführungsbeispielen das Batteriemodul eine Vielzahl von flächig (über das Fahrzeug) verteilt angeordnete Batteriezellen, z.B. in Längs und Querrichtung (senkrecht zur Durchstrahlungsrichtung) aufweist. Beispielsweise sind die Batteriezellen parallel zur Durchstrahlungsrichtung im Wesentlichen parallel zur Durchstrahlungsrichtung (-5° bis +5° oder -2° bis +2°) angeordnet. Herzu wird die Strahlungsquelle 102 entsprechend Ausführungsbeispielen ausgerichtet. Dadurch kann in Längsrichtung eine gute Abtastung der Spalten (vgl. Minima und Maxima in Fig. 3b2) bestimmt werden. Das gleiche gilt für die Abtastung in Breitenrichtung, wie das Diagramm aus Fig. 3a2 zeigt. Hier ergibt sich auch zu den Rändern der Geometrie 100' eine ausreichend gute Abtastung ohne Abfall der Strahlenenergie durch Absorption für die Spalte.

Die Fig. 3a2 und 3b2 tragen jeweils über die Abtastrichtung (Breitenrichtung 106br bei Fig. 3a2 und Längsrichtung bzw. Vorschubrichtung 106v bei Fig. 3b2) die Durchstrahlungsintensität auf. Beim Vergleich von Diagramm aus Fig. 3a2 im Vergleich zu dem Diagramm 1a2 wird ersichtlich, dass hier nun auch in Breitenrichtung 106br eine gute Abtastung erfolgen kann. Hintergrund hierfür ist, dass quer zum Fahrzeug 106 eine ausreichende Parallelität der Strahlen der Strahlenquelle 102 gewährleistet wird, so dass es nicht zu einer Überlagerung der benachbarten Batteriezellen im Produktionsbild und somit zur Verdeckung des Spalts zwischen den Zellen kommt. Diese Bereiche des Strahlenkegels können somit alle zur Auswertung herangezogen werden.

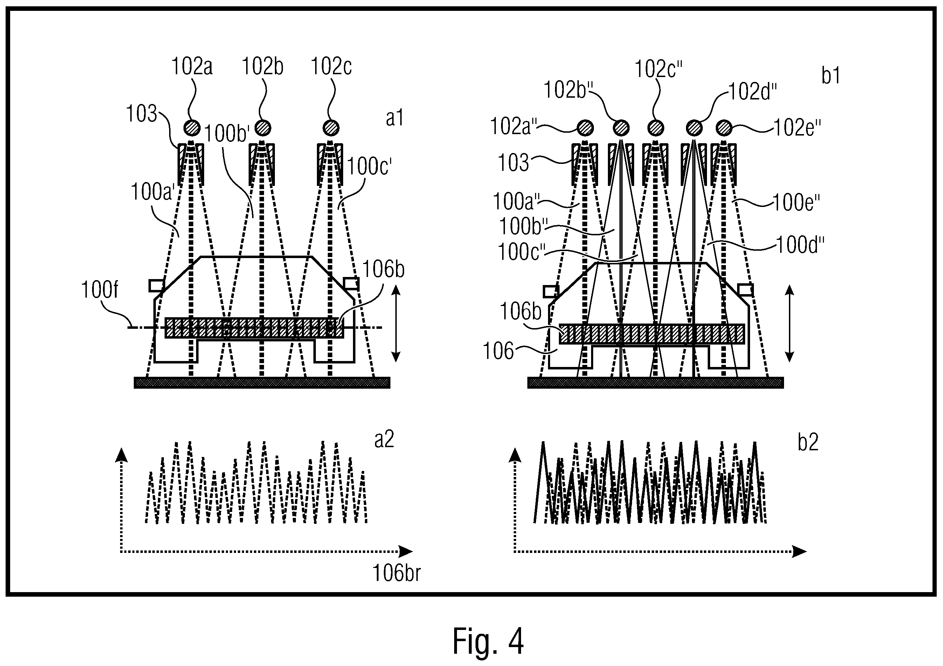

Wenn in der Praxis ein großes Objekt, wie z. B. ein Fahrzeug, abgetastet wird, so ist eine große Röntgenhalle in Anwendung, um die großen Dimensionen, insbesondere den großen Abstand 106d' zwischen Quelle 102 und Objekt 106b bzw. 102 und 104, zu ermöglichen. Ferner kann bzw. wird auch noch eine leistungsstarke Röntgenquelle 102 mit einer ausreichenden Dosis Leistung verwendet. Um hier entsprechend weiteren Ausführungsbeispielen eine kompaktere Bauform zu ermöglichen, können mehrere Röntgenröhren entlang der Fahrzeugquerachse 106br eingesetzt werden. In diesem Fall umfasst also die Strahlenquelle 102 mehrere Einzelstrahlenquellen. Anders ausgedrückt heißt es, dass das Röntgensystem mehrere Strahlenquellen 102a-102c umfassen kann. Die Strahlenquellen 102a bis 102c sind quer entlang der Breitenrichtung 106br angeordnet. Diese scannen anteilig einen Winkelbereich von ca. 10° des Fahrzeugs 106 abschnittsweise, wie im Zusammenhang mit Fig. 4a1 und 4b1 erläutert wird.

Entsprechend einem Ausführungsbeispiel können sich Strahlenfelder 100a', 100b' und 100c' in der Tiefenebene (Fokusebene) des Batteriemoduls 106b. Die Fokusebene ist mit dem Bezugszeichen 100f versehen. Wie zu erkennen ist, ist eine minimale Überlappung der Kegel 100a', 100b' und 100c' bzw. ein direktes Angrenzen der Kegel 100a', 100b' und 100c' in der Fokusebene 100f vorgesehen. Dies ermöglicht eine lückenlose Erfassung des Batteriemoduls 106b.

Anordnung mehrerer Röntgenquellen 102a, 102b und 102c entlang der Fahrzeugquerachse 100b' zur segmentweisen Erfassung der Module mit jeweils ausreichend kleinem Öffnungswinkel. Die Verknüpfung der einzelnen Bildfelder zu einem lückenlosen Gesamtbild erfolgt über die genaue Lokalisierung der Einbauhöhe des Batteriemoduls im Fahrzeug. Wie im Absorptionsprofil zu sehen wird von jedem Quelle-Detektor-Paar nur jeweils der mittlere Bereich des Abstrahlkegels genutzt. Die überstehenden Bereiche des Strahlkegels werden kollimiert, so dass eine möglichst geringe Überlagerung der benachbarten Bildbereiche erzielt wird. Um den Effekt für unterschiedliche Einbauhöhen der Batteriemodule zu optimieren, kann das Detektionssystem in der Höhenposition variiert werden. Damit ist ein einfacher Wechsel zwischen einer Limousine und einem SUV möglich.

Das resultierende Röntgensignal ist in dem Diagramm von Fig. 4a2 wiederum aufgetragen über die Breitenrichtung 106br dargestellt.

Entsprechend einem weiteren Ausführungsbeispiel überlappen sich die Strahlenfelder 100a" bis 100e" großflächig. Hierzu sind die Strahlenquellen 102a" bis 106e" dicht aneinander angrenzend entlang der Breitenrichtung 106br angeordnet.

Anordnung mehrerer Röntgenquellen 102a", 102b", 102c", 102d" und 102e" entlang der Fahrzeugquerachse zur segmentweisen Erfassung der Module, wobei die Röntgenquellen 102a", 102b", 102c", 102d" und 102e" jeweils überlagerte Sichtbereiche aufweisen und sequentiell geschaltet werden, um ein Bild mit zwei Winkeleinstellungen in einem Ablauf zu erhalten. Die Einschaltsequenz ist dabei so kurzzeitig im Verhältnis zum Scanvorschub, dass der Bildbereich in etwa konstant bleibt und eine Struktur aus jeweils zwei Blickwinkeln erfasst wird. Dieser Abbildungsmodus ermöglicht die Ausblendung überlagerter Strukturen entlang des Durchstrahlungspfades wie Lenksäule, Sitzgestänge oder Mittelkonsole. Auch hier wird die Fokusebene an die Fahrzeugbauart angepasst

Hier können entsprechend Ausführungsbeispielen die Röntgenröhren 102a" bis 102e" im Wechsel betrieben werden, was eine Abbildung ein und derselben Struktur aus Winkelbereichen ermöglicht. Durch diesen Ansatz werden Störeinflüsse durch überlagerte Strukturen, wie z. B. der Sitzgestänge oder die Längssäule des Fahrzeugs 106, minimiert.

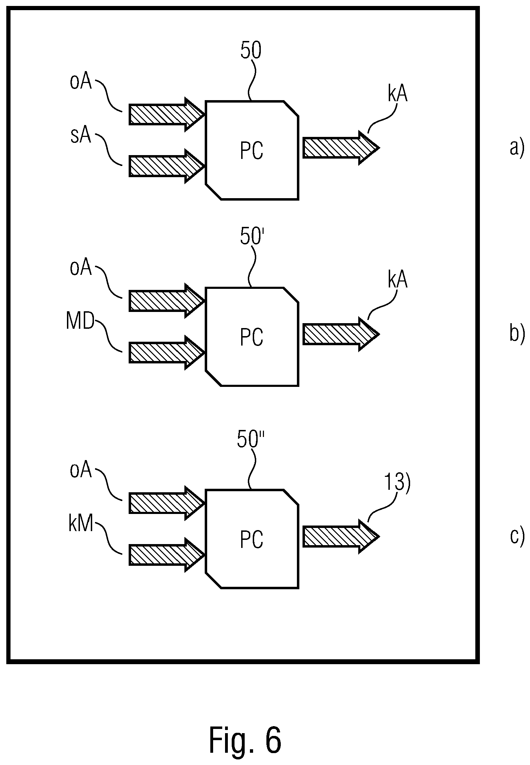

Entsprechend Ausführungsbeispielen ergibt sich bei dem Ausführungsbeispiel aus Fig. 4a1 ein reduzierter Abstand zwischen der Ebene, in welcher die Röntgenquellen 102a, 102b und 102c angeordnet sind, und dem Objekt 106 um etwa den Faktor 3. Insofern kann von einer fünffachen Abbildung auf eine zweifache Abbildung reduziert werden. Eine weitere Reduktion ist grundsätzlich mit mehreren Röhren, wie z. B. Fig. 4b1, möglich, wobei hier beispielsweise der Abstand weiter reduziert wird, sondern die Dichte der Röntgenröhren 102a" bis 102e" erhöht wird, um eben oben genannte Effekte der Minimierung von Störeinflüssen durch überlagerte Strukturen auszunutzen. Das resultierende Signal der Überlagerung ist in Fig. 4b2 dargestellt, wobei die Verarbeitung im Zusammenhang mit Fig. 6 erläutert wird.

An dieser Stelle sei angemerkt, dass entsprechend Ausführungsbeispielen die Strahlenbreite der Geometrie 100, 100a', 100b', 100c', 100a" bis 100e" durch einen Kollimator 103 je Röntgenquelle 102a bis 102c bzw. 102a" bis 102e" begrenzt wird.

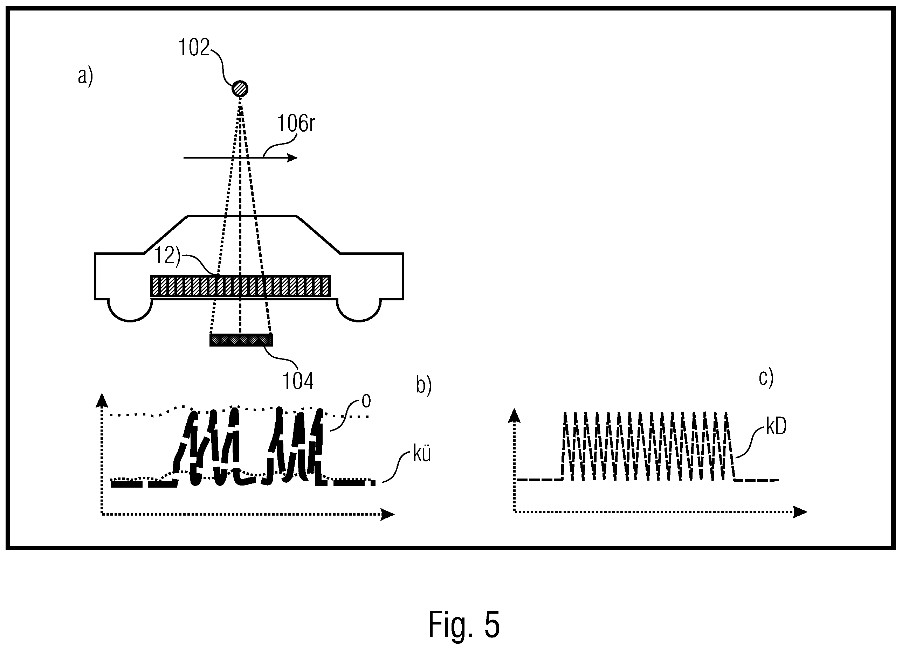

Bei den Ausführungsbeispielen aus den Figuren 4a1 und 4b1 sei angemerkt, dass hier immer auch die Abbildung des Objekts 106 bzw. 106b in der Querrichtung, das heißt also entlang der Breite 106br im Fokus steht. Durch den Überlapp kann einerseits der Anlagenabstand kompakter gestaltet werden und andererseits auch der Datenumfang erhöht werden, um so die zusätzlichen Daten zur Kompensation zu verwenden. Bezugnehmend auf Fig. 5a-c wird nun ein Ansatz erläutert, wie auch in Längsrichtung beziehungsweise Vorschubrichtung 106v der Informationsgehalt gesteigert werden kann. Durch den Einsatz von mehreren hintereinander angeordneten Detektoren/Zeilendetektoren oder den Einsatz eines flächenhaften Detektors 104' (vgl. Fig. 5a) kann der kegelförmige Strahl der Strahlenquelle 102 an mehreren Positionen entlang der Vorschubrichtung 106 gleichzeitig aufgenommen werden, um zusätzliche Informationen zu gewinnen, die unter anderem eine digitale Laminographie, z. B. zur Auswertung von Tiefeninformationen, ermöglichen. Die durch die Laminographie erzeugten Informationen können genutzt werden, um die Aufnahmen, wie sie beispielsweise mittels den Röntgensystemen aus Fig. 2, 3 oder 4 generiert wurden, zu optimieren. Dabei generiert die Laminographie eine Referenz der überlagerten Struktur sA, welche aus dem eigentlich gewünschten, aber artefaktbehafteten Datensatz kÜ (vgl. Diagramm aus Fig. 5b) herausgerechnet werden kann. Hierdurch ist ein kompensierter Absorptionsverlauf mit reduzierten Überlagerungen berechenbar. Dieser ist in Fig. 5c mit dem Bezugszeichen kD markiert.

Das ermöglicht z.B. die Nutzung von mehreren Zeilendetektoren oder von Flächendetektoren entlang der Fahrzeuglängsachse zur Erfassung von Daten zur Kompensation von überlagerten Strukturen oder zur Tiefenaufgelösten Darstellung

Nachfolgend wird Bezug nehmend auf Fig. 6 eine mögliche Verarbeitung erläutert.

Fig. 6a zeigt eine Berechnungseinheit 50, Fig. 6b eine Berechnungseinheit 50' und Fig. 6c eine Berechnungseinheit 50". Die Berechnungseinheiten 50, 50' und 50" sind alle dazu ausgebildet, einen kompensierten Absorptionsverlauf mit reduzierten Überlagerungen zu ermitteln, wobei sich der Berechnungsweg jeweils unterscheidet. Nachfolgend werden drei verschiedene Berechnungsweisen erläutert, wobei entsprechend weiteren Ausführungsbeispielen auch eine Kombination von zwei oder mehreren Berechnungsweisen möglich wäre.

Fig. 6a zeigt die Berechnungseinheit 50, die ausgebildet ist, auf Basis eines orthogonalen Absorptionsverlaufs oA den kompensierten Absorptionsverlauf kA unter Berücksichtigung eines schrägen Absorptionsverlaufs sA, schräg zu den Spalten der Batteriezelle, erfasst von einem anderen Detektorbereich entlang der Fahrzeuglängsachse, zu bestimmen. D.h., dass entsprechend Ausführungsbeispielen weitere Aufnahme(n) bei Schrägdurchstrahlung des Objekts gewonnen werden, basierend auf welchen die die Aufnahme(n) bei Orthogonaldurchstrahlung kompensiert werden.

Die Berechnungseinheit 50' (Fig. 6b) berechnet ebenfalls den kompensierten Absorptionsverlauf mit reduzierter Überlagerung KA, aber basierend auf dem orthogonalen Absorptionsverlauf OA sowie Modelldaten MD generiert aus Referenzscans vergleichbarer Fahrzeuge.

Die Berechnungseinheit 50" (Fig. 6c) berechnet den kompensierten Absorptionsverlauf KA basierend auf dem orthogonalen Absorptionsverlauf OA sowie Kl-Modellen KM. Bei den KI-Modellen KM handelt es sich um Modelle und Netze erzeugt mit maschinellem Lernen, Deep Learning etc. anhand von großen Stichproben konnotierter Daten.

Die Ausführungsbeispiele aus Fig. 6a, 6b und 6c haben gezeigt, dass zusätzlich zu der Bilderfassung, welche über dem Vorschub des Fahrzeugs über die Detektionseinheit oder dem Vorschub einer Detektionseinheit (Quelle und Detektor) entlang des Fahrzeugs schichtweise erfolgt, der Bildauswertung eine besondere Rolle zukommt.

Die entstehenden Röntgenabsorptionsdaten werden in einer Rechnereinheit verarbeitet und automatisiert ausgewertet. Dabei werden die Überlagerungen resultierend aus peripheren Strukturen über Bildverarbeitungsoperatoren aus den Bildern herausgerechnet, um eine homogene Abbildung der Zellstrukturen zu ermöglichen (KA). Dabei werden im Anwendungsfall c) die überlappendenden Bildbereiche so miteinander kombiniert, dass jeweils der am wenigsten von Fremdstrukturen überschattete Bereich dem Bild hinzugefügt wird.

Entsprechend Ausführungsbeispielen wird die Recheneinheit auf die wohlbekannten Strukturen der Batteriemodule angepasst. Durch Anwendung von Methoden des maschinellen Lernens sowie klassischer Bildverarbeitungsverfahren werden die morphologischen Merkmale der zu untersuchenden Strukturen definiert und automatisiert ausgewertet. Bei prismatischen Zellen wird insbesondere eine Abweichung von der rechtwinkligen Zellform erkannt, indem der längliche Spalt innerhalb der Zelle vermessen wird. Bei zylindrischen Zellen wird die Rundheit einer jeder Zelle ermittelt und deren Abstand zu den benachbarten Zellen, was einen Hinweis auf eine Verformung des Moduls ermöglicht. Bei ausreichend hoher Durchstrahlungsenergie kann auch der Füllgrad der Elektrolytflüssigkeit innerhalb der Zellen festgestellt werden. Bei einem Austritt ist mit einer deutlichen Abnahme der Absorption innerhalb der jeweiligen Zelle zu rechnen.

Entsprechend Ausführungsbeispielen können mittels des Verfahrens Abweichungen in der Gesamtform des Moduls ermittelt werden. So kann z. B. der Batterierahmen auf Formabweichungen hin untersucht werden, um den Einfluss eines Unfallschadens beurteilen zu können. Ebenso ist die Detektion von Fremdpartikeln innerhalb der Zellen und Module denkbar.

Das Auswerteverfahren lässt sich also wie folgt verallgemeinern:
- Ermitteln z. B. mittels der Röntgenvorrichtung aus Fig. 2, Fig. 3a1, Fig. 3b1 oder Fig. 4a1 und Fig. 4b1 oder eventuell Durchführen des Aspekts aus Fig. 5a-c eines orthogonalen Scans;
- Kompensieren von Überlagerungen basierend auf den Daten des erhaltenen Scans unter Berücksichtigung von Referenzdaten, Daten ermittelt auf Basis von künstlicher Intelligenz oder von Aufnahmen basierend auf Schrägdurchstrahlung (schräg zur Objektbreite oder schräg zur Objektlänge).

Entsprechend Ausführungsbeispielen kann beispielsweise auf Basis der Orthogonaldurchstrahlungsaufnahme und der Schrägdurchstrahlungsaufnahme ein überlagertes Objekt erkannt werden und das überlagerte Objekt aus der Orthogonalaufnahme entfernt werden.

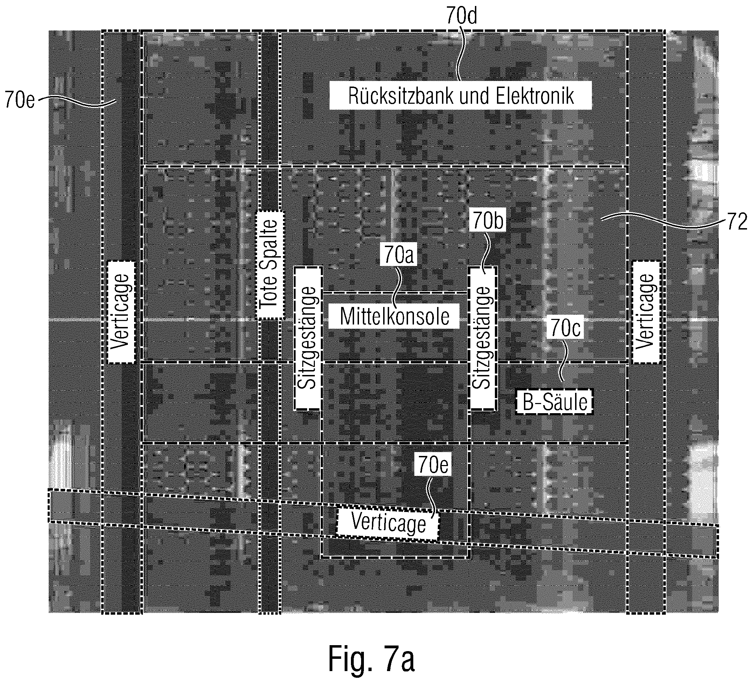

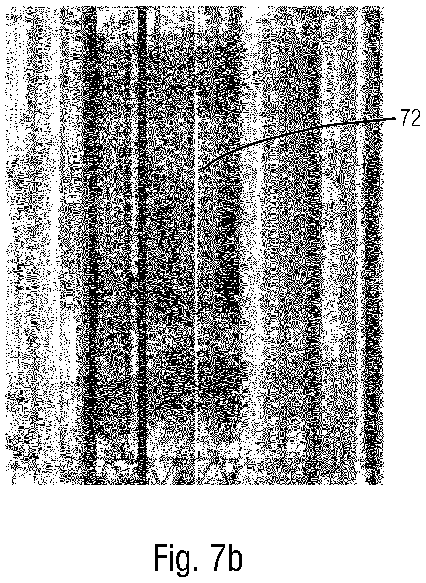

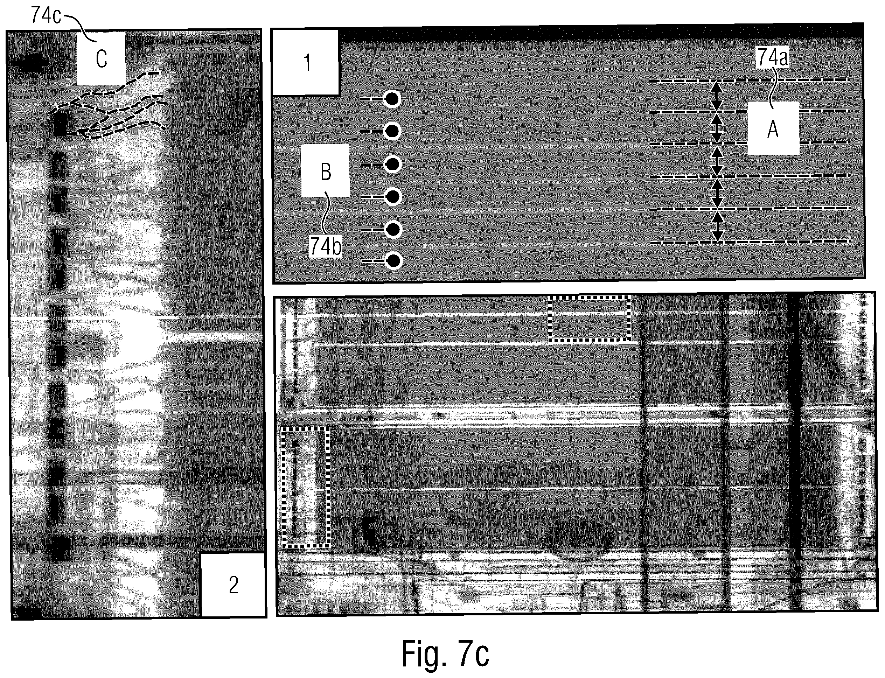

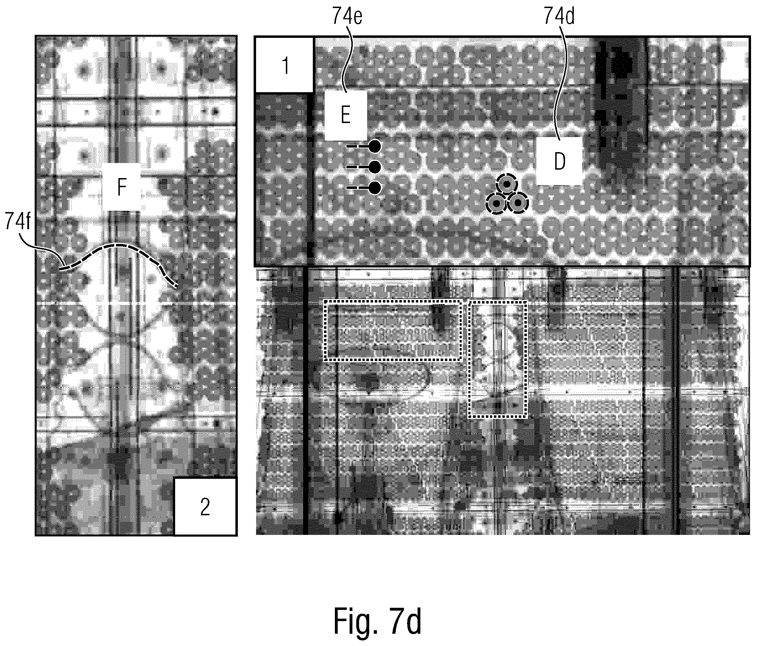

Bezugnehmend auf Figur 7 werden überlagerte Objekte dargestellt.

Fig. 7a zeigt eine Durchstrahlungsaufnahme, in welcher mit den Bezugszeichen 70a, 70b, 70c, 70d und 70e Überlagerungsobjekte markiert sind, die die Mehrzahl an kreisförmigen Batteriezellen 72 überlagert. Beispiele der Überlagerungsobjekte ist beispielsweise die Rücksitzbank 70d, die Mittelkonsole 70a, das Sitzgestänge 70b oder auch die B-Säule 70c Die hier in Fig. 7a dargestellte Messung dient als Vergleichsmessung aus einer Schrägdurchstrahlung und kann bei der eigentlichen Aufnahme der Achsposition aus Fig. 7b, die mit guter Auflösung die Batteriezellen 72 illustriert, mitberücksichtigt werden.

Fig. 7c zeigt in den Bezugszeichen 74a, 74b und 74c drei potentiell erkennbare Fehler. Der Fehler 74a zeigt eine formabweichende Folge einer Aufblähung einer Zelle. Der Fehler 74b illustriert eine Dichteschwankung infolge von Elektrolytaustritt. Der Fehler 74c illustriert einen Kontaktierungsfehler/Verbindungsabriss.

Fig. 7d zeigt weitere Fehler 74d, 74e und 74f. Beim Fehler 74d handelt es sich um die Detektion von Zellenverdichtungen/Verlagerungen. Der Fehler 74e ist wiederum auf eine Dichteschwankung infolge von Elektrolytaustritt zurückzuführen. Bei dem Fehler 74f handelt es sich um einen Kontaktierungsfehler/Verbindungsabriss.

An dieser Stelle sei angemerkt, dass entsprechend der bevorzugten Ausführungsbeispielen eine Durchstrahlung eines Batteriemoduls erfolgt. Das Batteriemodul weist typischerweise Zellen auf. Diese Zellen sind entsprechend der bevorzugen Ausführungsbeispielen entlang der Breitenrichtung und/oder entlang der Vorschubrichtung angeordnet. Hierdurch wird erreicht, dass eine Durchstrahlung der Zellen so erfolgt, dass die Zwischenräume zwischen den Zellen längs durchstrahlt werden, das heißt also im Wesentlichen entlang der Richtung der Röntgenstrahlung bzw. der Strahlungsrichtung angeordnet sind. Entsprechende Ausführungsbeispielen ist also das zu durchstrahlenden Objekt so angeordnet, dass die Grenzen zwischen Zellen des zu durchstrahlenden Objektes entlang der Durchstrahlungsrichtung verlaufen.

Bevorzugte Anwendungen des oben erläuterten Konzepts ist die Analyse von Batterien/Hochvoltbatterien von Elektrofahrzeugen bzw. Hybridfahrzeugen, z. B. nach Unfallgeschehen, beim Fahrzeugverkauf oder zur Klärung der Fahrzeughistorie bzw. bei Fahrzeugbegutachtungen. Diese Anwendungen sind insbesondere für den Gebrauchtwagenmarkt interessant. Allerdings kann auch vor Auslieferung beim Hersteller im Werk (digitale Fahrzeugakte zum Abgleich im Lebenszyklus) vor dem Fahrzeugtransport auf Frachtschiffen, z. B. im Hafen) eine Untersuchung erfolgen. Vorteile sind das schnelle Prüfverfahren mit einer Erfassungsdauer von ca. 5 Minuten. Einsetzbar ist das Verfahren für alle gängige Batterienmodulbauformen, z. B. prismatische oder zyklische Bauformen. Wie oben erläutert kann durch entsprechende Algorithmen oder KI eine Analyseautomation zur Unterstützung des Prüfers erfolgen.

Entsprechend Ausführungsbeispielen kann das zu durchstrahlende Objekt in einem Container bzw. brandhemmenden Container angeordnet sein. Hier wäre es also denkbar, dass das Speichermodul oder auch das ganze Fahrzeug in einem brandhemmenden Container angeordnet ist. Diese brandhemmenden Container kann beispielsweise Teil der Durchstrahlungsvorrichtung sein. Alternativ wäre es auch denkbar, dass der brandhemmende Container das zu durchstrahlende Objekt bildet, während ein zu untersuchendes Objekt in selbigen angeordnet ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichen

- 102: Strahlenquelle
- 104: Röntgendetektor (Pixelliertin 1D oder 2D)
- 100: Strahlkegel mit charakteristischem Öffnungswinkel
- 106: Fahrzeug mit Batteriemodul im Unterbodenbereich
- 106v: Fahrzeug oder Scanner Vorschub zur Schichtweiseerfassung entlang der Fahrzeuglängsachse
- 100: Strahlkegel mit charakteristischem Öffnungswinkel für segmentweise Erfassung
- 103: Strahlkollimation zur Abschattung der benachbarten Detektoren
- 100f: Fokusebene der Strahlkegel in der das Batteriemodul lückenlos zusammengesetzt werden kann
- 100b", 100c", 100d": Zusätzliche Strahlkegel zur sequentiellen Erfassung aus unterschiedlichen Betrachtungswinkeln
- 10b: Absorptionsverlauf durchs Fahrzeug quer zum Fahrzeug, die Intensitätspeaks zeigen das Vorhandensein eines ausreichenden Spaltes zwischen den Zellen
- 11d/OA: Absorptionsverlauf orthogonal zu Spalten der Batteriezellen, erfasst entlang der Fahrzeuglängsachse
- sA: Absorptionsverlauf schräg zu den Spalten der Batteriezellen, erfasst in einem anderen Detektorbereich entlang der Fahrzeuglängsachse
- kA: Kompensierter Absorptionsverlauf mit reduzierten Überlagerungen
- MD: Modelldaten generiert aus Referenzscans vergleichbarer Fahrzeuge
- KM: Modelle und Netze erzeugt mit maschinellem Lernen, Deeplearningetc. anhand großer Stichproben konnotierter Daten

## Patentansprüche

1. Röntgensystem zur zerstörungsfreien Werkstoffprüfung eines zu durchstrahlenden Batteriemoduls (106) eines Fahrzeuges oder eines in ein Fahrzeug eingebautes Batteriemoduls (106b), mit folgenden Merkmalen:
mindestens einer Strahlenquelle (102);
mindestens einem Strahlendetektor (104);
wobei zwischen der mindestens einen Strahlenquelle (102) und dem mindestens einen Strahlendetektor (104) das zu durchstrahlende Objekt (106) angeordnet werden kann, wobei die mindestens eine Strahlenquelle (102) von dem zu durchstrahlenden Objekt (106) mindestens mit einer fünffachen Breite (106b) des Abtastbereichs beabstandet angeordnet ist, so dass sich eine fächerförmige Strahlengeometrie zumindest in Querrichtung ausbildet, wobei der Abtastbereich der Breite (106b) des Objekts (106) in Querrichtung entspricht oder wobei der Abtastbereich einem Teil der Breite (106b) des Objekts (106) in Querrichtung entspricht; wobei das Objekt zumindest ein Batteriemodul aufweist;
wobei der Öffnungswinkel (100α) der Strahlengeometrie in Querrichtung kleiner 5° beträgt und wobei der Öffnungswinkel der Strahlengeometrie in einer Vorschubrichtung kleiner als 10° beträgt.

2. Röntgensystem gemäß Anspruch 1, wobei der Abstand zwischen der mindestens einen Strahlenquelle (102) zu dem zu durchstrahlenden Objekt (106) mindestens 3m oder mindestens 5 m oder mindestens 10 m oder mindestens 11 m beträgt; und/oder
wobei das zu durchstrahlende Objekt eine Mehrzahl an Batteriemodulen aufweist, die entlang der Querrichtung angeordnet sind.

3. Röntgensystem gemäß einem der vorherigen Ansprüche, wobei das Objekt (106) in Vorschubrichtung und/oder in Vorschubrichtung senkrecht zur Querrichtung kontinuierlich zur Abtastung bewegt werden kann; und/oder
wobei das zu durchstrahlende Objekt eine Vielzahl an Zellen aufweist, die entlang der Vorschubrichtung angeordnet sind.

4. Röntgensystem gemäß einem der vorherigen Ansprüche, wobei die mindestens eine Strahlenquelle (102) durch mehrere Einzelstrahlenquellen gebildet ist oder wobei die mindestens eine Strahlenquelle (102) durch mehrere quer zum Objekt (106) angeordnete Einzelstrahlenquellen gebildet ist.

5. Röntgensystem gemäß Anspruch 4, wobei die Strahlengeometrien der Einzelstrahlenquellen sich überlappende Strahlenfelder und/oder sich in der Fokusebene überlappende Strahlenfelder aufweisen; oder
wobei die Strahlengeometrien der Einzelstrahlenquellen überlappende Strahlengeometrien aufweisen; oder
wobei die Strahlengeometrien der Einzelstrahlenquellen überlappende Strahlengeometrien aufweisen, wobei die Einzelstrahlenquellen ausgebildet sind, wechselseitig betrieben zu werden.

6. Röntgendetektor gemäß einem der vorherigen Ansprüche, wobei sich der Röntgendetektor über die gesamte Breite (106b) des Objekts (106) erstreckt; und/oder wobei der Röntgendetektor durch einen Zeilendetektor oder Flächendetektor gebildet ist, der sich über die gesamte Breite (106b) des Objekts (106) erstreckt; und/oder
wobei das Röntgensystem mehrere entlang einer Vorschubrichtung angeordnete Strahlendetektoren (104) oder Strahlenquellen (102) aufweist.

7. Röntgensystem gemäß einem der vorherigen Ansprüche, wobei die Strahlenquelle (102) oder die Einzelstrahlenquellen kollimiert sind oder jeweils einen Kollimator (103) aufweisen, der die Strahlengeometrie mit < 10° definiert; und/oder
wobei die mindestens eine Röntgenquelle eine Energie von maximal 450 KeV oder von maximal 360 KeV bereitstellt; und/oder wobei die Energie so gering gewählt ist, dass keine Durchstrahlung eines intakten Objekts (106) oder einer intakten Batteriezelle erfolgt.

8. Röntgensystem gemäß einem der vorherigen Ansprüche, wobei der Abstand zwischen der mindestens einen Röntgenquelle und dem zu durchstrahlendem Objekt (106) und/oder dem mindestens einen Strahlendetektor (104) einstellbar ist.

9. Röntgensystem gemäß einem der vorherigen Ansprüche, das ferner eine Auswertevorrichtung aufweist, die ausgebildet ist, um mehrere Aufnahmen über mehrere Positionen und/oder um mehrere Aufnahmen über mehrere Strahler-Detektor-Kombinationen auszuwerten; oder
das ferner eine Auswertevorrichtung aufweist, die ausgebildet ist, um mehrere Aufnahmen über mehrere Positionen und/oder um mehrere Aufnahmen über mehrere Strahler-Detektor-Kombinationen auszuwerten wobei die Auswertevorrichtung ausgebildet ist, Überlagerungsobjekte in den einzelnen Aufnahmen anhand der mehreren Aufnahmen zu erkennen, und/oder um die Abbildung des Überlagerungsobjekts in den einzelnen Aufnahmen zu kompensieren; und/oder
wobei das Röntgensystem eine Auswertevorrichtung aufweist, die ausgebildet ist, ein Überlagerungsobjekt anhand einer Referenzaufnahme des zu durchstrahlenden Objekts (106) zu erkennen und/oder die Abbildung des Überlagerungsobjekts in einzelnen Aufnahmen zu kompensieren; und/oder wobei nur die Auswertevorrichtung ausgebildet ist, die Aufnahme mit geringer oder keiner Überlagerung auszuwählen.

10. Röntgensystem gemäß einem der vorherigen Ansprüche, wobei das Röntgensystem ferner eine Auswertevorrichtung aufweist, die auf einem Kl-Algorithmus basiert und/oder ausgebildet ist, um morphologische Merkmale zu erkennen; oder
wobei das Röntgensystem ferner eine Auswertevorrichtung aufweist, die auf einem KI-Algorithmus basiert und/oder ausgebildet ist, um morphologische Merkmale zu erkennen, wobei die Auswertevorrichtung ausgebildet ist, um Abweichungen des Objekts (106) oder von Teilen des Objekts (106) von einer Normalform zu erkennen (Verformung einer zylindrischen Zelle, Verformung einer prismatischen Zelle); oder
wobei das Röntgensystem ferner eine Auswertevorrichtung aufweist, die auf einem KI-Algorithmus basiert und/oder ausgebildet ist, um morphologische Merkmale zu erkennen; wobei die Auswertevorrichtung ausgebildet ist, einen Abstand zwischen zwei Teilen des Objekts (106), insbesondere zwischen zwei Batteriezellen zu bestimmen.

11. Röntgensystem gemäß einem der vorherigen Ansprüche, wobei das Objekt ein Batteriemodul ist, das mehrere parallel angeordnete Batteriezellen, insbesondere zylindrische Batteriezellen oder prismatische Batteriezellen aufweist, wobei die Durchstrahlungsrichtung der Strahlenquelle (102) parallel oder im Wesentlichen parallel zu den Batteriezellen ausgerichtet ist; und/oder
wobei das Objekt ein Batteriemodul ist, das eine Vielzahl von flächig verteilt angeordnete Batteriezellen aufweist.

12. Röntgensystem gemäß einer der vorhergehenden Ansprüche, wobei das Röntgensystem ein Container oder brandhemmenden Container aufweist, in welchem das zu durchstrahlende Objekt angeordnet ist; und/oder
das zu durchstrahlende Objekt einen Container oder brandhemmenden Container aufweist, in welchem ein zu untersuchendes Objekt, insbesondere ein Fahrzeug oder ein Batteriemodul eines Fahrzeuges angeordnet ist.

13. Verfahren zur Ermittlung einer Röntgenaufnahme unter Verwendung eines Röntgensystems gemäß einem der vorherigen Ansprüche mit dem Schritt:
Durchstrahlen eines zu durchstrahlenden Objekts (106) in einem Abstand der Strahlenquelle (102) von dem zu durchstrahlenden Objekt (106) von mindestens fünffacher Breite (106b) des Abtastbereichs, um eine erste Aufnahme zu erhalten, so dass sich eine fächerförmige Strahlengeometrie zumindest in Querrichtung ausgebildet; wobei das Objekt zumindest ein Batteriemodul aufweist;
wobei der Abtastbereich der Breite (106b) des Objekts (106) in Querrichtung entspricht oder wobei der Abtastbereich einem Teil der Breite (106b) des Objekts (106) in Querrichtung entspricht.

14. Verfahren gemäß Anspruch 13, wobei das Verfahren den Schritt des Wiederholens des Schritts des Durchstrahlens für eine weitere Aufnahme aufweist, oder wobei das Verfahren den Schritt des Wiederholens des Durchstrahlens für eine weitere Aufnahme sowie des Kompensierens eines Überlappungsobjekts auf Basis einer Erkennung des Überlappungsobjekts in der Aufnahme unter Zuhilfenahme der weiteren Aufnahme aufweist; und/oder
wobei die weitere Aufnahme bei Schrägdurchstrahlung des Objekts schräg zu der Breit gewonnen ist und die Aufnahme bei Orthogonaldurchstrahlung in Bezug auf die Breite; und/oder
wobei das Verfahren den Schritt des Anordnens des zu dem Strahlenobjekts derart aufweist, dass Zellen des zu durchstrahlenden Objekts entlang einer Querrichtung und/oder entlang einer Vorschubrichtung angeordnet sind,

15. Computerprogramm, umfassend Befehle, die bewirken, dass das Röntgensystem des Anspruchs 1 die Verfahrensschritte nach Anspruch 13 oder 14 ausführt.

## Claims

1. X-ray system for non-destructive material inspection of a battery module (106) to be irradiated of a vehicle or a battery module (106b) incorporated in a vehicle, comprising:
at least one radiation source (102);
at least one radiation detector (104);
wherein the object to be irradiated (106) can be arranged between the at least one radiation source (102) and the at least one radiation detector (104), wherein the at least one radiation source (102) is arranged spaced apart from the object to be irradiated (106) with at least five times the width (106b) of the scanning area, such that a fan-shaped radiation geometry is formed at least in transverse direction, wherein the scanning area corresponds to the width (106b) of the object (106) in transverse direction, or wherein the scanning area corresponds to a part of the width (106b) of the object (106) in transverse direction, wherein the object comprises at least one battery module;
wherein the opening angle (100α) of the radiation geometry in traverse direction is less than 5° and wherein the opening angle (100α) of the radiation geometry in advance direction is less than 10°.

2. X-ray system according to claim 1, wherein the distance between the at least one radiation source (102) to the object to be irradiated (106) is at least 3 m, or at least 5 m, or at least 10 m, or at least 11 m; and/or
wherein the object to be irradiated comprises a plurality of battery modules arranged along the transverse direction.

3. X-ray system according to any one of the preceding claims, wherein the object (106) is moved in advance direction and/or is moved continuously in advance direction perpendicular to the transverse direction for scanning; and/or
wherein the object to be irradiated comprises a plurality of cells that are arranged along the advance direction.

4. X-ray system according to any one of the preceding claims, wherein the at least one radiation source (102) is formed by several individual radiation sources, or wherein the at least one radiation source (102) is formed by several individual radiation sources arranged transverse to the object (106).

5. X-ray system according to claim 4, wherein the radiation geometries of the individual radiation sources comprise overlapping radiation fields and/or radiation fields overlapping in the focal plane; or
wherein the radiation geometries of the individual radiation sources comprise overlapping radiation geometries; or
wherein the radiation geometries of the individual radiation sources comprise overlapping radiation geometries, wherein the individual radiation sources are configured to be operated alternately.

6. X-ray detector according to any one of the preceding claims, wherein the X-ray detector extends across the entire width (106b) of the object (106); and/or
wherein the X-ray detector is formed by a line detector or area detector, which extends across the entire width (106b) of the object (106); and/or
wherein the X-ray system comprises several radiation detectors (104) or radiation sources (102) arranged along an advance direction.

7. X-ray system according to any one of the preceding claims, wherein the radiation source (102) or the individual radiation sources are collimated, or each comprise a collimator (103) that defines the radiation geometry with < 10°; and/or
wherein the at least one X-ray source provides an energy of at most 450 keV or at most 360 keV; and/or wherein the energy is chosen so low that no irradiation of an intact object (106) or an intact battery cell occurs.

8. X-ray system according to any one of the preceding claims, wherein the distance between the at least one X-ray source and the object to be irradiated (106) and/or the at least one radiation detector (104) can be adjusted.

9. X-ray system according to any one of the preceding claims, further comprising an evaluation apparatus configured to evaluate several pictures across several positions and/or several pictures across several radiator/detector combinations; or
further comprising an evaluation apparatus configured to evaluate several pictures across several positions and/or several pictures across several radiator/detector combination wherein the evaluation apparatus is configured to detect overlapping objects in the individual pictures based on the several pictures and/or to compensate the image of the overlapping object in the individual pictures; and/or
wherein the X-ray system comprises an evaluation apparatus configured to detect an overlapping object based on a reference picture of the object to be irradiated (106) and/or to compensate the image of the overlapping object in individual pictures; and/or
wherein only the evaluation apparatus is configured to select the picture with little or no overlap.

10. X-ray system according to any one of the preceding claims, wherein the X-ray system further comprises an evaluation apparatus that is based on an Al algorithm and/or is configured to detect morphological features; or
wherein the X-ray system further comprises an evaluation apparatus that is based on an Al algorithm and/or is configured to detect morphological features, wherein the evaluation apparatus is configured to detect deviations of the object (106) or parts of the object (106) from a normal form (deformation of a cylindrical cell, deformation of a prismatic cell); or
wherein the X-ray system further comprises an evaluation apparatus that is based on an Al algorithm and/or is configured to detect morphological features;
wherein the evaluation apparatus is configured to determine a distance between two parts of the object (106), in particular between two battery cells.

11. X-ray system according to any one of the preceding claims, wherein the object is a battery module that comprises several battery cells arranged in parallel, in particular cylindrical battery cells or prismatic battery cells, wherein the irradiation direction of the radiation source (102) is oriented in parallel or essentially in parallel to the battery cells; and/or
wherein the object is a battery module comprising a plurality of battery cells that are arranged in a planar distributed manner.

12. X-ray system according to any one of the preceding claims, wherein the X-ray system comprises a container or fire-retardant container in which the object to be irradiated is arranged; and/or
the object to be irradiated comprises a container or fire-retardant container in which an object to be inspected, in particular a vehicle or a battery module of a vehicle, is arranged.

13. Method for determining an X-ray picture by using an X-ray system according to any one of the preceding claims, comprising:
irradiating an object to be irradiated (106) at a distance of the radiation source (102) from the object to be irradiated (106) of at least five times the width (106b) of the scanning area to obtain a first picture, such that a fan-shaped radiation geometry is formed, at least in transverse direction, wherein the object comprises at least one battery module;
wherein the scanning area corresponds to the width (106b) of the object (106) in transverse direction, or wherein the scanning area corresponds to part of the width (106b) of the object (106) in transverse direction.

14. Method according to claim 13, wherein the method comprises the step of repeating the step of irradiating for a further picture, or wherein the method comprises the step of repeating the irradiation for a further picture as well as compensating an overlapping object based on detecting the overlapping object in the picture with the help of the further picture; and/or
wherein the further picture is taken with skewed irradiation of the object skewed to the width and the picture is taken with orthogonal irradiation with regard to the width; and/or

15. Computer program comprising instructions causing the X-ray system of claim 1 to perform the method steps according to claim 13 or 14

## Revendications

1. Système à rayons X pour le contrôle non-destructif d'un module de batterie (106) d'un véhicule ou d'un module de batterie (106b) monté dans un véhicule, destinés à être radiographiés, présentant les caractéristiques suivantes :
au moins une source de rayons X (102) ;
au moins un détecteur de rayons X (104) ;
l'objet (106) à radiographier pouvant être disposé entre la source de rayons X (102) et le détecteur de rayons X (104), la source de rayons X (102) étant disposée à une distance de l'objet (106) à radiographier au moins égale à cinq fois la largeur (106b) de la zone de balayage, de sorte qu'une géométrie de rayonnement en éventail se forme au moins dans la direction transversale, la zone de balayage correspondant à la largeur (106b) de l'objet (106) dans la direction transversale ou à une partie de cette largeur (106b) de l'objet (106) dans la direction transversale, l'objet comportant au moins un module de batterie ;
l'angle d'ouverture (100α) de la géométrie de rayonnement dans la direction transversale étant inférieur à 5° et l'angle d'ouverture de la géométrie de rayonnement dans une direction d'avance étant inférieur à 10°.

2. Système à rayons X selon la revendication 1, dans lequel la distance entre la source de rayons X (102) et l'objet (106) à radiographier est d'au moins 3 m, d'au moins 5 m, d'au moins 10 m ou d'au moins 11 m ; et/ou
l'objet à radiographier comportant une pluralité de modules de batterie, disposés le long de la direction transversale.

3. Système à rayons X selon l'une des revendications précédentes, dans lequel l'objet (106) peut être déplacé en continu pour le balayage dans la direction d'avance et/ou dans une direction d'avance perpendiculaire à la direction transversale ; et/ou
l'objet à radiographier comportant une pluralité de cellules disposées le long de la direction d'avance.

4. Système à rayons X selon l'une des revendications précédentes, dans lequel la source de rayons X (102) est formée par plusieurs sources de rayons X individuelles, ou dans lequel la source de rayons X (102) est formée par plusieurs sources de rayons X individuelles disposées transversalement par rapport à l'objet (106).

5. Système à rayons X selon la revendication 4, dans lequel les géométries de rayonnement des sources de rayonnement individuelles présentent des champs de rayonnement se chevauchant et/ou des champs de rayonnement se chevauchant dans le plan focal ; ou
les géométries de rayonnement des sources de rayonnement individuelles présentant des géométries de rayonnement se chevauchant ; ou
les géométries de rayonnement des sources de rayonnement individuelles présentant des géométries de rayonnement se chevauchant, les sources de rayonnement individuelles étant conçues pour être exploitées en alternance.

6. Détecteur de rayons X selon l'une des revendications précédentes, dans lequel le détecteur de rayons X s'étend sur toute la largeur (106b) de l'objet (106) ; et/ou dans lequel le détecteur de rayons X est formé par un détecteur linéaire ou un détecteur de surface s'étendant sur toute la largeur (106b) de l'objet (106) ; et/ou
le système à rayons X comportant plusieurs détecteurs de rayons X (104) ou sources de rayons X (102) disposés le long d'une direction d'avance.

7. Système à rayons X selon l'une des revendications précédentes, dans lequel la source de rayons X (102) ou les sources de rayons X individuelles sont collimatées ou comportent chacune un collimateur (103) qui définit une géométrie de rayonnement ayant un angle d'ouverture < 10° ; et/ou
ladite au moins une source de rayons X fournissant une énergie maximale de 450 KeV ou une énergie maximale de 360 KeV ; et/ou l'énergie étant choisie suffisamment faible pour qu'aucune traversée par rayonnement d'un objet intact (106) ou d'une cellule de batterie intacte n'ait lieu.

8. Système à rayons X selon l'une des revendications précédentes, dans lequel la distance entre au moins une source de rayons X et l'objet (106) à radiographier et/ou au moins un détecteur de rayons X (104) est réglable.

9. Système à rayons X selon l'une des revendications précédentes, comportant en outre un dispositif d'évaluation conçu pour évaluer plusieurs images prises en plusieurs positions et/ou plusieurs images prises au moyen de plusieurs combinaisons source de rayons X-détecteur ; ou
comportant en outre un dispositif d'évaluation conçu pour évaluer plusieurs images prises en plusieurs positions et/ou plusieurs images prises au moyen de plusieurs combinaisons source de rayons X-détecteur, le dispositif d'évaluation étant conçu pour détecter des objets superposés dans les différentes images au moyen de la pluralité d'images, et/ou pour compenser la représentation de l'objet superposé dans les différentes images ; et/ou
le système à rayons X comportant un dispositif d'évaluation conçu pour détecter un objet superposé à l'aide d'une image de référence de l'objet (106) à radiographier et/ou pour compenser la représentation de l'objet superposé dans des images individuelles ; et/ou seul le dispositif d'évaluation étant conçu pour sélectionner l'image présentant une superposition faible ou nulle.

10. Système à rayons X selon l'une des revendications précédentes, le système à rayons X comportant en outre un dispositif d'évaluation fondé sur un algorithme d'IA et/ou conçu pour reconnaître des caractéristiques morphologiques ; ou
le système à rayons X comportant en outre un dispositif d'évaluation fondé sur un algorithme d'IA et/ou conçu pour reconnaître des caractéristiques morphologiques, le dispositif d'évaluation étant conçu pour reconnaître des écarts de l'objet (106) ou de parties de l'objet (106) par rapport à une forme normale (déformation d'une cellule cylindrique, déformation d'une cellule prismatique) ; ou
le système à rayons X comportant en outre un dispositif d'évaluation fondé sur un algorithme d'IA et/ou conçu pour reconnaître des caractéristiques morphologiques ;
le dispositif d'évaluation étant conçu pour déterminer une distance entre deux parties de l'objet (106), en particulier entre deux cellules de batterie.

11. Système à rayons X selon l'une des revendications précédentes, dans lequel l'objet est un module de batterie comportant plusieurs cellules de batterie disposées en parallèle, notamment des cellules de batterie cylindriques ou des cellules de batterie prismatiques, la direction d'irradiation de la source de rayons X (102) étant orientée parallèlement ou sensiblement parallèlement aux cellules de batterie ; et/ou
l'objet étant un module de batterie comportant une pluralité de cellules de batterie réparties en surface.

12. Système à rayons X selon l'une des revendications précédentes, le système à rayons X comportant un conteneur ou un conteneur ignifuge dans lequel l'objet à radiographier est disposé ; et/ou
l'objet à radiographier comportant un conteneur ou un conteneur ignifuge dans lequel est disposé un objet à examiner, notamment un véhicule ou un module de batterie d'un véhicule.

13. Procédé d'obtention d'une image radiographique au moyen d'un système à rayons X selon l'une des revendications précédentes, comprenant l'étape consistant à :
radiographier un objet (106) à radiographier, la distance entre la source de rayons X (102) et l'objet (106) à radiographier étant au moins égale à cinq fois la largeur (106b) de la zone de balayage, afin d'obtenir une première image, de sorte qu'une géométrie de rayonnement en éventail se forme au moins dans la direction transversale, l'objet comportant au moins un module de batterie ;
la zone de balayage correspondant à la largeur (106b) de l'objet (106) dans la direction transversale ou la zone de balayage correspondant à une partie de la largeur (106b) de l'objet (106) dans la direction transversale.

14. Procédé selon la revendication 13, le procédé comprenant l'étape consistant à répéter l'étape de radiographie pour obtenir une autre image, ou le procédé comprenant l'étape consistant à répéter la radiographie pour obtenir une autre image ainsi qu'à compenser un objet superposé sur la base d'une détection de l'objet superposé dans l'image à l'aide de l'autre image ; et/ou
l'autre image étant obtenue par radiographie oblique de l'objet par rapport à la largeur, et l'image étant obtenue par radiographie orthogonale par rapport à la largeur ; et/ou
le procédé comprenant l'étape consistant à disposer l'objet à radiographier de telle sorte que des cellules de l'objet à radiographier soient disposées le long d'une direction transversale et/ou le long d'une direction d'avance,

15. Programme d'ordinateur comprenant des instructions qui, lorsqu'elles sont exécutées, amènent le système à rayons X selon la revendication 1 à exécuter les étapes du procédé selon la revendication 13 ou 14.
